# EUROPEAN PATENT APPLICATION

(11) **EP 4 815 472 A1**
(43) Date of publication of application: **30.09.2026**
(21) Application number: 25305427.4
(22) Date of filing: 25.03.2025
(51) Int. Cl.: H04N 21/81

(54) **MAPPING IN ANIMATION LINK**

(71) Applicant: InterDigital CE Patent Holdings, SAS, 75017 Paris (FR)
(72) Inventor: AVRIL, Quentin, 35830 Betton (FR); COVA REGATEIRO, João Pedro, 35220 Chateaubourg (FR); GOSSELIN, Philippe Henri, 35340 Liffre (FR); LE CLERC, Francois, 35590 L'Hermitage (FR)
(74) Representative: Vossius & Partner Patentanwälte Rechtsanwälte mbB

(57) **Abstract**

A system, device and method used for mapping in an animation link are disclosed. The method includes obtaining an Avatar Representation Format (ARF) comprising a preamble, the preamble including at least one supported animation with at least one animation link, parsing the at least one animation link, parsing a type and a mapping array of the parsed at least one animation link, and parsing at least one index in the parsed mapping array.

## Description

### BACKGROUND

The current effort in Moving Picture Experts Group (MPEG) provides support to animate avatar representations and stream its animation parameters over the network. Avatar Representation Format (ARF) arrived with rich properties, able to provide the support for realistic renderings, simplistic animations and easy parametrizations that allow users to personalize and animate their characters freely. ARF includes a format created with the intention of providing the first interoperable format capable of representing and efficiently transmitting avatar related properties.

### SUMMARY

A system, device and method used for mapping in an animation link are disclosed. The method includes obtaining an Avatar Representation Format (ARF) comprising a preamble, the preamble including at least one supported animation with at least one animation link, parsing the at least one animation link, parsing a type and a mapping array of the parsed at least one animation link, and parsing at least one index in the parsed mapping array. The method may include wherein the at least one animation link includes an index of an animation framework in at least one supported animation. The method may include wherein the at least one index is provided as a link. The method may include wherein the at least one animation link includes a mapping to an animation framework in at least one supported animation. The method may include wherein the mapping is provided as an array. The method may include wherein if at least one value in the mapping array is negative, there is no mapping between at least one animation and the at least one supported animation. The method may include wherein the at least one animation link includes at least one of blendshape, controller, skeleton or landmark.

The system and device include one or more processors and at least one memory coupled to said one or more processors. The one or more processors are configured to obtain an Avatar Representation Format (ARF) comprising a preamble, the preamble including at least one supported animation with at least one animation link, parse the at least one animation link, parse a type and a mapping array of the parsed at least one animation link, and parse at least one index in the parsed mapping array. The at least one animation link may include an index of an animation framework in at least one supported animation. The at least one animation link may include a mapping to an animation framework in at least one supported animation. If at least one value in the mapping array is negative, there may be no mapping between at least one animation and the at least one supported animation. The at least one animation link may include at least one of blendshape, controller, skeleton or landmark .

A computer program comprising program code instructions for implementing the method is disclosed. A computer readable storage medium having stored thereon instructions for implementing the method is disclosed. A signal comprising a bitstream, formed by performing the method is disclosed.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1 illustrates an Avatar Representation Format (ARF) data model with a set of containers grouped into categories forming the basis of MPEG ARF;
FIG. 2 illustrates a method for encoding avatar parameters;
FIG. 3 illustrates a method for decoding avatar parameters;
FIG. 4 illustrates a method 400 for the parsing of a component object;
FIG. 5 illustrates a block diagram illustrating an example of an encoding method;
FIG. 6 illustrates a block diagram illustrating an example of a decoding method;
FIG. 7 illustrates an example architecture of a device which may be configured to implement methods according to embodiments of the present principles; and
FIG. 8 illustrates an example of an embodiment of the syntax of a stream when the data are transmitted over a packet-based transmission protocol.

### DETAILED DESCRIPTION

Systems, devices, and methods are described. The systems, devices, and methods relate to is adding more complete and generic mapping information in the Moving Picture Experts Group (MPEG) Avatar Representation Format (ARF). The systems, devices, and methods relate to eliminating the order constraint when signaling mapping information between different supported animation and tracking frameworks.

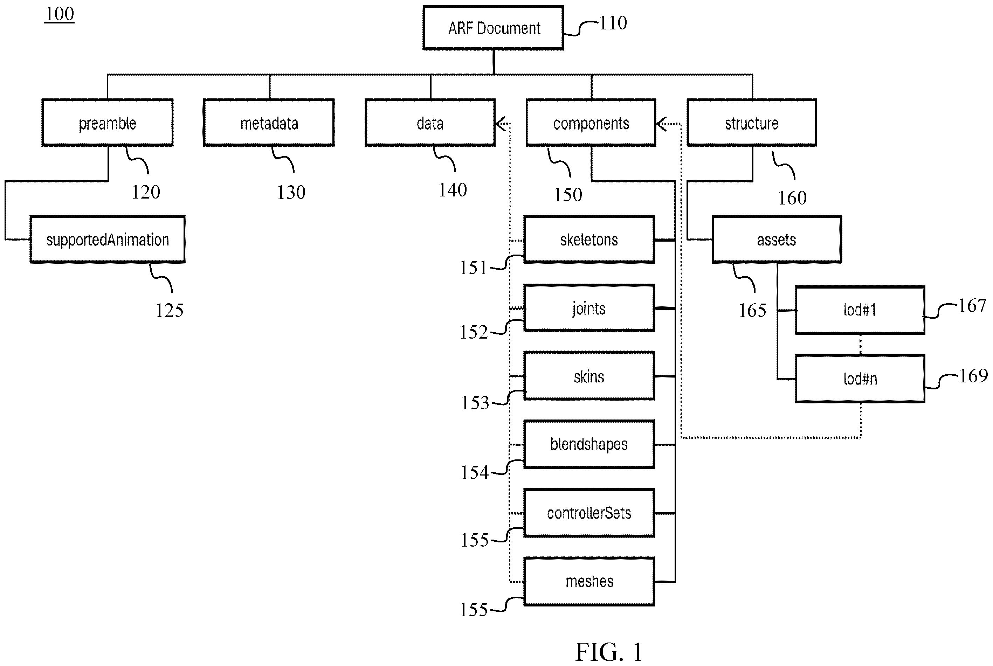

FIG. 1 illustrates an ARF data model 100 with a set of containers grouped into categories forming the basis of MPEG ARF. ARF data model 100 includes an ARF document 110. ARF document 110 includes categories such as preamble 120, metadata 130, data 140, components 150, and structure 160. Within the category of preamble 120 may be supported animation 125. Within the category of components 150 there are skeletons 151, joints 152, skins 153, blendshapes 154, controllerSets 155 and meshes 156. Within the category of structure 160 are assets 165 which include lod#1 167 and lod#n 169.

In this structure, the "skeletons", "blendshapeSet", "controllerSet" all contain the property "animationInfo" set forth in Table 1 which provides a link to a list of the supported animation and tracking frameworks.

**Table 1: Property animationInfo**

| | | | |
|---|---|---|---|
| animation Info | array(AnimationLink) | O | Establishes a link to the supported animation and tracking frameworks that this blend shape set can be used with. |

Each item of the list of "animationInfo" is an AnimationLink object establishes a link between an animation component and a list of supported animation frameworks as defined in Table 2.

**Table 2: Definition of AnimationLink object**

| Name | Type | Use | Description | |
|---|---|---|---|---|
| type | enumeration | M | The type of the supported animation. The allowed types are: | |
| | | | | • ANIMATION_FACE |
| | | | | • ANIMATION_BODY |
| | | | | • ANIMATION_HAND |
| | | | | • ANIMATION_LANDMARK |
| links | array(number) | | Provides the indices in the associated supported animations list, for the animation frameworks that this blendshape set can be used with. | |
| Legend: For Use: M=mandatory, O=optional, OD=optional with default value, CM=conditionally mandatory. | | | | |

The described systems, devices and methods enable identifying or signaling that an animation component (landmarkSet, skeleton or blendshapeSet) is compatible, such as mappable, for example, to a specific animation framework. The mapping between the two may be order specific (1-to-1 mapping), meaning, for example, that the 1st blendshape of the blendshapeSet A (signaled by being compatible with the animation framework X) is mapped to the 1st blendshape of the animation framework X. Most of the animation frameworks, such as OpenXR, AndroidXR, ARKit, and the like, for example, follow similar order and naming convention system but may slightly adapt them to perfectly correspond to their specific needs. If, for any reason, an animation framework has a different order in its blendshapes, this animationLink property becomes useless. The systems, devices and methods signal a mapping between an animation component and an animation framework while enabling to precisely define the way the mapping is performed (not 1-to-1) and without being constrained by the order.

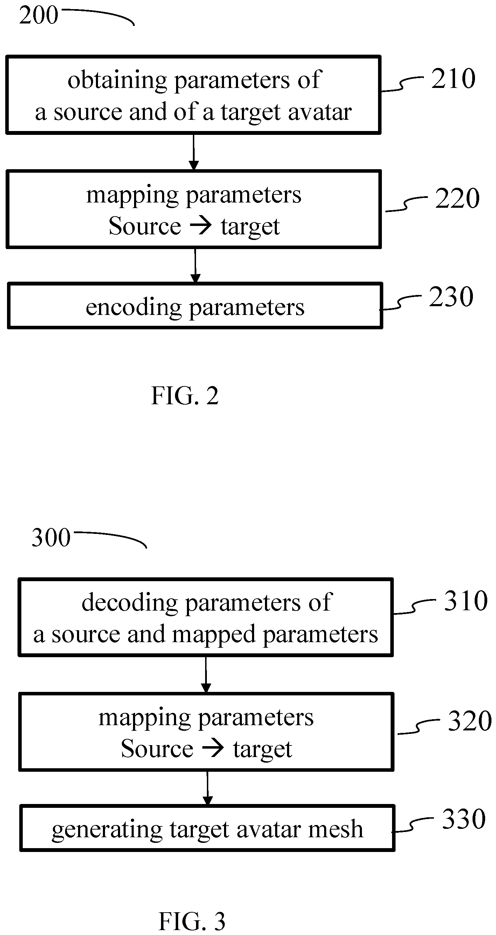

FIG. 2 illustrates a method 200 for encoding avatar parameters. At 210, parameters of a source avatar parameters and parameters of a target avatar are obtained from at least a source. At 220, the parameters of the source avatar are mapped to the parameters of the target avatar. At 230, the mapped parameters and the source avatar parameters are encoded in a data stream.

FIG. 3 illustrates a method 300 for decoding avatar parameters. At 310, parameters of a source avatar and mapped parameters are decoded from a data stream, e.g., the one generated by the encoding method of FIG. 2. At 320, the mapping (e.g., mapped parameters) obtained in a previous packet are used to compute the target avatar parameters (e.g., weights) given the source avatar parameters (e.g., weights). At 330, a target avatar mesh is generated and may be rendered.

In an example, the AnimationLink property which establishes a link between an animation component and a list of supported animation frameworks is extended by the AnimationLink object set forth in Table 3.

**Table 3: New definition of AnimationLink object**

| Name | Type | Use | Description | |
|---|---|---|---|---|
| type | enumeration | M | The type of the supported animation. The allowed types are: | |
| | | | | • ANIMATION_FACE |
| | | | | • ANIMATION_BODY |
| | | | | • ANIMATION_HAND |
| | | | | • ANIMATION_LANDMARK |
| links | array(Link) | M | Provides the list of Link objects. | |
| Legend: For Use: M=mandatory, O=optional, OD=optional with default value, CM=conditionally mandatory. | | | | |

The new Link object provides a way to signal a mapping between two animation frameworks which is not constrained with its order. For example, this may include Blendshape 1 of Framework A corresponding to Blendshape 1 of Framework B. The Link object may be defined as set forth in Table 4.

**Table 4: Definition of Link object**

| Name | Type | Use | Description |
|---|---|---|---|
| link | number | M | Provides the index of the animation framework in the associated supported animations list (see Section 6.2.1 of the ARF specifications) that the following mapping is defined on. |
| mapping | array(number) | M | Provides a mapping to the animation framework in the abovementioned link. If the values are negative or N/A it means there is no mapping between the animation component (blendshape, controller, skeleton or landmark) and the supported animation. |
| Legend: For Use: M=mandatory, O=optional, OD=optional with default value, CM=conditionally mandatory. | | | |

The "link" propriety gives the index of the animation framework in the associated supported animations list that as the basis of the following mapping definitions. A value of 0 references the first element of the array of uri of the supported animation type (e.g. "ANIMATION_FACE", "ANIMATION_BODY" etc.).

The "mapping" propriety defines the mapping between the supported animation framework and the current animation set. The "mapping" propriety is a list of indices of animation element of the supported animation (blendshape, controller, landmark, joint) to map to the current one. If the list is [0,2,1,3,4] and that the component is a blendshapeSet then the 1st blendshape of the supported animation framework is mapped to the blendshape-0 of the current animation set, the 2nd blendshape of the supported animation framework is mapped to the blendshape-2 of the current animation set, the 3rd blendshape of the supported animation framework is mapped to the blendshape-1 of the current animation set, the 4th blendshape of the supported animation framework is mapped to the blendshape-3 of the current animation set, and the 5th blendshape of the supported animation framework is mapped to the blendshape-4 of the current animation set.

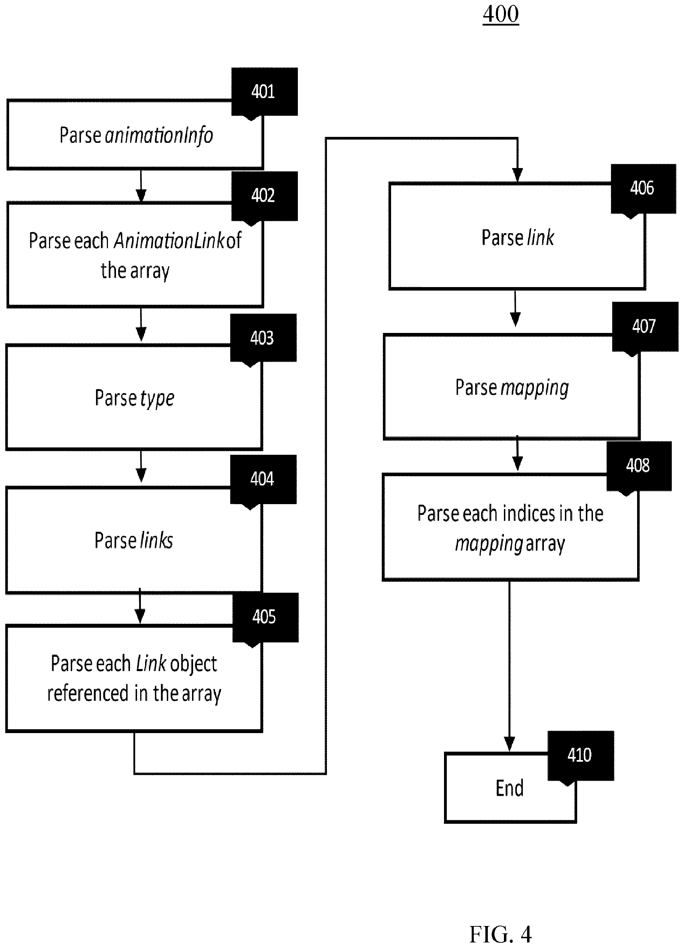

FIG. 4 illustrates a method 400 for the parsing of a Component object. Method 400 may include the parsing where the component objects such as a BlendshapeSet, LandmarkSet, ControlerSet or Skeleton object with the new "animationInfo" property, for example. At 401, method 400 may include parsing animationinfo. This may occur for every animationInfo being processed in the ARF file. At 402, method 400 may include parsing each animationlink of the array. For example, each AnimationLink object referenced by the "animationInfo" list is parsed. At 403, method 400 may include parsing by type. For example, for one AnimationLink object, the type propriety is parsed. At 404, method 400 may include parsing links. For example, for one AnimationLink object, the links propriety is parsed. At 405, method 400 may include parsing link object referenced in the array. For example, each Link object referenced in the links list is parsed. At 406, method 400 may include parsing the link. For example, for one Link object, the link propriety is parsed. At 407, method 400 may include parsing the mapping. For example, for one Link object, the mapping propriety is parsed. At 408, method 400 may include parsing each indices in the mapping array. For example, each indices referenced in the mapping list is parsed. At 410, method 400 may include ending the parsing.

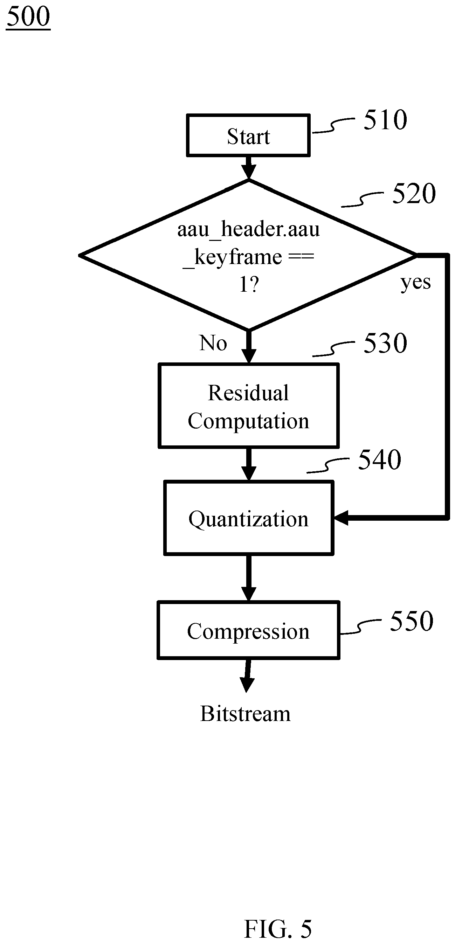

FIG. 5 illustrates a block diagram illustrating an example of an encoding method 500. Encoding method 500 may also be referred to as a processing model. Encoding method 500 provides an encoding method for the avatar animation unit using quantization and compression. Method 500 uses quantization to code and compress the bitstream format. The quantization flag in one example can be fixed and normative with a defined default value for all the data parameters transmitted in the payload.

In a different embodiment, the quantization flag is transmitted and unique to all data parameters in the payload, which means all data in the payload is quantified to an integer value to the same number of bits e.g., quantization of 10 bits.

In yet another embodiment, the quantization flag is transmitted per keyframe and different for every data parameter transmitted in the payload, making the bitstream size variable depending on the type of data being transmitted in the payload.

FIG. 5 illustrates an encoding method for an example aau_header and aau_payload function (at 510). At 520, the header (aau_header) is checked to determine whether the aau is a keyframe aau or a non keyframe aau.

If the aau is not a keyframe, residual values in the aau_payload are computed (at 530) using EQ. 1. $data ′ = {data}_{prev} - data ,$ where "data" can be represented by any data floating value present in the "aau_payload" with a "aau_type" equals to "AAU_ANIMATION", "AAU_JOINT" or "AAU_LANDMARK" e.g., "amu_animation_target_weights[i]" that represent 32 bits of type float32, but not limited to. The data of the previous frame data_prev is subtracted from the current frame data, which results in applying quantization to the difference between two frames, wherein the previous frame is a keyframe.

If the aau is a keyframe, values are not modified as defined in Eq. 2. $data ′ = data ,$

Then, in all cases, values (residual or absolute) are quantized (at 540) using aau_quantization defined in the aau header and Eq. 3. ${data}_{q} = round \left(\frac{data ′}{1 ≪ QS}\right) ,$ The QS can be defined by any variable integer value e.g., QS = 5, or QS = 10 or any positive number. The resulted data_q in one embodiment is used to define a number of bits for the data that needs to be compressed and transmitted.

A compression mechanism of integers (at 550) is used, this can typically be entropy encoding, but not limited too.

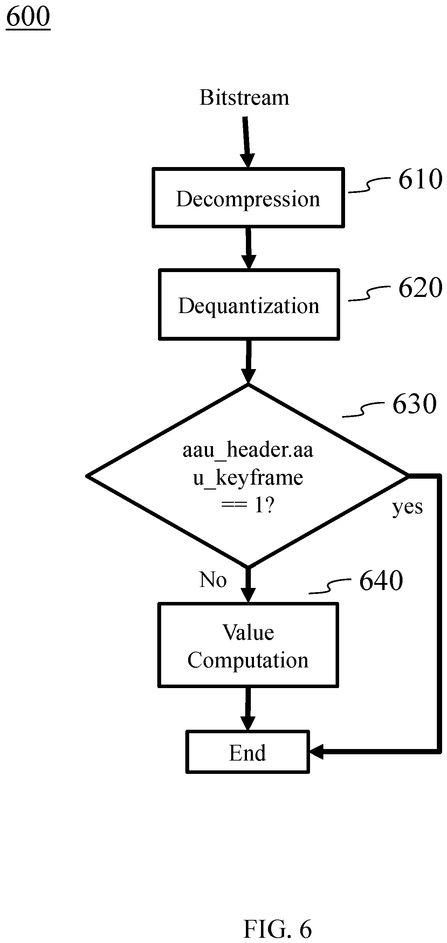

FIG. 6 illustrates a block diagram illustrating an example of a decoding method 600. Decoding method 600 may be a processing model, for example. Decoding method 600 may be for the avatar animation unit reconstruction. A decompression mechanism of integers is used (at 610), consistent with the one used in the encoding stage (at 550). This may include using entropy decoding. The result is an aau_header and an aau_payload where floating values are quantized.

The floating values are reconstructed/dequantized (at 620) using the aau_quantization defined in the aau header and Eq. 4. $data ′ = \left(1≪QS\right) {data}_{q} ,$

If the aau is not a keyframe (at 630), absolute values in the aau_payload are computed (at 640) using Eq. 5. $data = {data}_{prev} - data ′ ,$

If the aau is a keyframe, values are not modified as defined in Eq. 6.: $data = data ′ ,$

An avatar may then be rendered once AAUs are reconstructed.

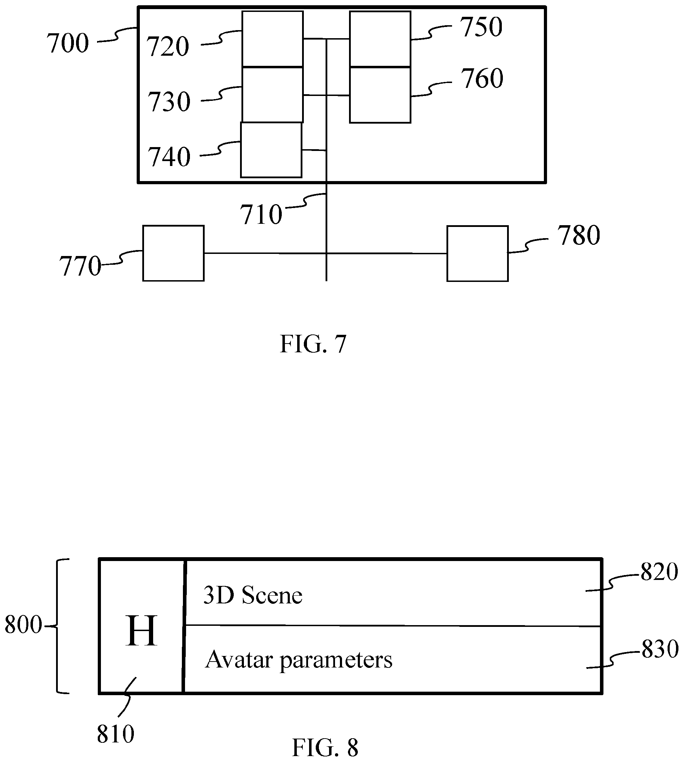

FIG. 7 illustrates an example architecture of a device 700 which may be configured to implement methods according to embodiments of the present principles. The device is linked with other devices via their bus 710 and/or via I/O interface 760. Device 700 may include a processor 720, a Read Only Memory (ROM) 730, a Random Access Memory (RAM) 740, a storage interface 750, an input/output (I/O) interface 760, and a power supply (not shown). Device 700 may include one or more of these elements described and the elements may be communicatively coupled by a data and address bus 710. Processor 720 (or CPU) is included in device 700. Processor may be a Digital Signal Processor (DSP), for example. Input/output (I/O) interface 760 may be for reception of data to transmit, from an application, for example. Power supply may include a battery, for example.

In accordance with an example, power supply is external to the device. For memory 730, 740 the word « register » used in the specification may correspond to area of small capacity (some bits) or to very large area (e.g. a whole program or large amount of received or decoded data). ROM 730 may include at least a program and parameters. ROM 730 may store algorithms and instructions to perform techniques in accordance with present principles. When switched on, CPU 720 may upload the program in RAM 740 and executes the corresponding instructions.

RAM 740 includes, in a register, the program executed by CPU 720 and uploaded after switch-on of device 700, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Device 700 may be linked, for example, via bus 710 to a set of sensors 770 and to a set of rendering devices 780. Sensors 770 may be, for example, cameras, microphones, temperature sensors, Inertial Measurement Units, GPS, hygrometry sensors, IR or UV light sensors or wind sensors. Rendering devices 780 may be, for example, displays, speakers, vibrators, heat, fan, etc.

In accordance with examples, device 700 may be configured to implement a method according to the present principles of managing a representation of the real environment of a user of an XR application. Device 700 may be a mobile device, a communication device, a game device, a tablet (or tablet computer), a laptop, a still picture camera, and a video camera.

FIG. 8 illustrates an example of an embodiment of the syntax of a stream when the data are transmitted over a packet-based transmission protocol. FIG. 8 illustrates shows an example structure 800 of a stream encoding point clouds according to the present principle. The structure consists in a container which organizes the stream in independent elements of syntax. The structure may comprise a header part 810 which is a set of data common to every syntax element of the stream. For example, the header part comprises some of metadata about syntax elements, describing the nature and the role of each of them. The structure comprises a payload comprising an element of syntax 820 and at least one element of syntax 830 (there may be an element of syntax 800 for each type of attribute data, for instance one for the color, one for the reflectance, one for the normal vectors, etc.). Syntax element 820 comprises data representative of the geometry of the point cloud, that is, for example, a series of bits representative of the 3D blocks, for example represented as a trisoup.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

In the present application, the terms "reconstructed" and "decoded" may be used interchangeably, the terms "encoded" or "coded" may be used interchangeably, the terms "pixel" or "sample" may be used interchangeably, and the terms "image," "picture" and "frame" may be used interchangeably. Usually, but not necessarily, the term "reconstructed" is used at the encoder side while "decoded" is used at the decoder side.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment. Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways.

For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining an Avatar Representation Format (ARF) comprising a preamble, the preamble including at least one supported animation with at least one animation link;
parsing the at least one animation link;
parsing a type and a mapping array of the parsed at least one animation link; and
parsing at least one index in the parsed mapping array.

2. The method of claim 1, wherein the at least one animation link includes an index of an animation framework in at least one supported animation.

3. The method of claim 1 or 2, wherein the at least one index is provided as a link.

4. The method of any one of claims 1 to 3, wherein the at least one animation link includes a mapping to an animation framework in at least one supported animation.

5. The method of any one of claims 1 to 4, wherein the mapping is provided as an array.

6. The method of any one of claims 1 to 5, wherein if at least one value in the mapping array is negative, there is no mapping between at least one animation and the at least one supported animation.

7. The method of any one of claims 1 to 5, wherein the at least one animation link includes at least one of blendshape, controller, skeleton or landmark.

8. An apparatus comprising:
one or more processors; and
at least one memory coupled to said one or more processors, wherein said one or more processors are configured to:
obtain an Avatar Representation Format (ARF) comprising a preamble, the preamble including at least one supported animation with at least one animation link;
parse the at least one animation link;
parse a type and a mapping array of the parsed at least one animation link; and
parse at least one index in the parsed mapping array.

9. The apparatus of claim 8, wherein the at least one animation link includes an index of an animation framework in at least one supported animation.

10. The apparatus of any one of claims 8 to 9, wherein the at least one animation link includes a mapping to an animation framework in at least one supported animation.

11. The apparatus of any one of claims 8 to 10, wherein if at least one value in the mapping array is negative, there is no mapping between at least one animation and the at least one supported animation .

12. The apparatus of any one of claims 8 to 11, wherein the at least one animation link includes at least one of blendshape, controller, skeleton or landmark .

13. A computer program comprising program code instructions for implementing the method according to any one of claims 1-7 when executed by a processor.

14. A computer readable storage medium having stored thereon instructions for implementing the method of any one of claims 1-7.

15. A signal comprising a bitstream, formed by performing the method of any one of claims 1 to 7.
